# EUROPEAN PATENT APPLICATION

(11) **EP 2 403 168 A1**
(43) Date of publication of application: **04.01.2012**
(21) Application number: 11171372.3
(22) Date of filing: 24.06.2011
(51) Int. Cl.: H04B 10/18, H04B 10/158

(54) **Communication transmission system with optically aided digital signal processing dispersion compensation**

(30) Priority: 29.06.2010 US 825585
(71) Applicant: TYCO ELECTRONICS SUBSEA COMMUNICATIONS LLC, Morristown, NJ 07960 (US)
(72) Inventor: Nissov, Morten, Hershey, PA Pennsylvania 17033 (US); Pilipetskii, Alexei, Colts Neck, NJ New Jersey 07722 (US); Bergano, Neal, Lincroft, NJ New Jersey 07738 (US)
(74) Representative: Ashton, Gareth Mark

(57) **Abstract**

The present disclosure is directed to managing dispersion compensation in optical transmission line (130) utilizing single mode fiber with no in-line dispersion compensation. A communication system terminal (120) includes one or more dispersion compensation modules configured to compensate for at least a portion of optical dispersion associated with optical data signals supplied from the transmission line (130). A receiver (125) communicatively coupled to the transmission line includes a digital signal processor configured to compensate for an additional portion of dispersion associated with the optical data signals converted to electrical signals by the receiver.

## Description

### Field of the Invention

Embodiments of the present disclosure relate to the field of optical communication systems. More particularly, the present disclosure relates to the use of dispersion compensation modules to optically aid in dispersion compensation of optical DWDM signals performed by digital signal processing circuits.

### Discussion of Related Art

In long haul optical communication systems, various modulation schemes are used to transmit optical signals using dense wavelength division multiplexing (DWDM)where a plurality of optical channels each at a particular wavelength propagate over fiber optic cables. These long-haul optical systems can be undersea fiber optic communication systems that operate at high data rates per channel. Unfortunately, as these bit rates increase, so do the transmission penalties associated with the transmission fiber's dispersion and nonlinear index of refraction. After propagation over long distances, the impact of these effects create processing and decoding difficulties at the receiver which may compromise the integrity of the transmitted information.

One type of signal distortion caused by propagation of an optical signal in a fiber is chromatic dispersion which is the result of waveguide dispersion (*i.e.* different wavelengths of light propagate in the fiber at different speeds) and material dispersion (*i.e.* phase velocity of the light varies with different wavelengths). Another fiber effect is polarization mode dispersion (PMD) which is the result of imperfections in the fiber that lead to different propagation speeds for orthogonal polarization components of an optical signal.

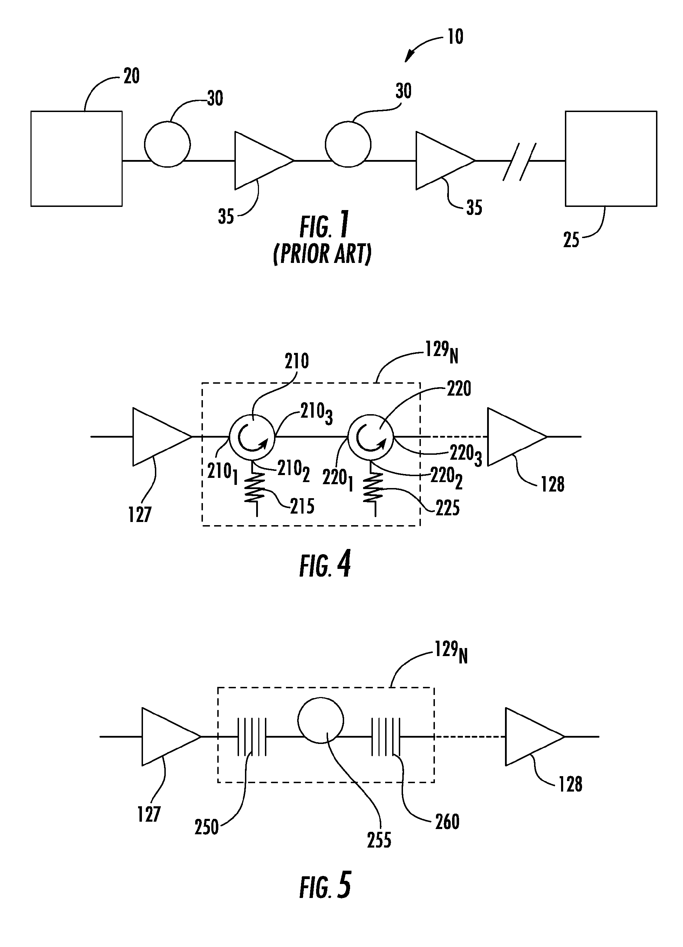

Various techniques have been employed to reduce the deleterious effects of dispersion over long distance DWDM transmission systems. For example, certain modulation techniques such as Quadrature Phase Shift Keying(QPSK) and Polarization Multiplexed QPSK (PM-QPSK) may be implemented which improves transmission tolerances to chromatic dispersion and PMD as well as increasing spectral efficiency by simultaneously transmitting on two orthogonal polarizations. Another compensation technique employs in-line dispersion compensating fiber (DCF) disposed within each of the fiber spans of the transmission line to compensate for dispersion as it accumulates throughout the transmission path. For example, Fig. 1 illustrates an optical transmission system 10 having a transmitter 20, a receiver 25 and a plurality of fiber spans defined by SMF 30 and optical amplifiers 35. The DCF is installed in each of the spans to compensate for accumulated dispersion within the particular span. Of course, due to the dispersion slope of the transmission fiber, not all wavelengths of the transmitted signal will have zero dispersion for a particular span. Any remaining dispersion may be compensated for at the receiver 25. For example, receiver 25 may be a coherent receiver which allows the use of digital signal processing (DSP) to compensate for accumulated dispersion.

Generally, coherent receivers detect both amplitude and phase to decode the received optical data signals. Because certain of these long-haul systems extend across the Atlantic and Pacific Oceans, there is significant cost and complexity with installing DCF within each of the fiber spans (referred to as "in-line"). Thus, there has been interest in using fiber optic cables with no in-line dispersion compensation and only using SMF as the transmission medium for undersea communication systems. However, if in-line DCF is not used, accumulated dispersion over the transmission line may be too large to compensate for by using only DSP techniques. For example, optical transmission over trans-Atlantic distances of approximately 6500km with no in-line compensation results in accumulated dispersion in the range of a 120000 to 140000ps/nm; and optical transmission over trans-Pacific distances of approximately 10000km results in accumulated dispersion that may exceed 200000 ps/nm. Accumulated dispersion at these levels result in the overlapping of a large number of data bits, thereby compromising transmission performance. By way of example, at 40Gb/s transmission rates using PM-QPSK results in approximately 10²-10³ bits overlapping and for 100 Gb/s transmission rates using PM-QPSK results in approximately 10³ - 10⁴ bits overlapping. In order to compensate for these high dispersion values using only DSP, it would require implementing finite impulse response (FIR) filters with a plurality of taps at the receiver terminals or by performing Fourier transforms on a relatively large number of sampled received bits. Consequently, this would require a prohibitive number of application specific integrated circuits for DSP processing at the receiver resulting in loss of receiver optical to signal noise ratio sensitivity and limit the amount of dispersion that can be compensated for using DSP. Accordingly, an object of the present disclosure is to overcome these problems and provide a transmission line utilizing SMF with no in-line dispersion compensation and to optically aid DSP dispersion compensation at a system terminal.

### Summary of the Invention

Embodiments of the present disclosure are directed to managing dispersion compensation in optical communication systems. In an embodiment, a communication system terminal includes a dispersion compensation unit (DCU) communicatively coupled to an optical transmission line. The DCU has a first and second optical amplifiers and a dispersion compensation module (DCM) disposed therebetween. The DCM is configured to compensate for at least a first portion of optical dispersion associated with the optical signals supplied from the transmission line. A receiver is communicatively coupled to the second amplifier and is configured to convert the plurality of optical signals into corresponding electrical signals. The receiver includes a digital signal processor configured to compensate for a second portion of dispersion associated with each of the corresponding electrical signals.

In another embodiment, a communication system includes a transmitter configured to supply a modulated optical signal having a plurality of optical channels. A first dispersion compensation module (DCM) is communicatively coupled to the transmitter and is configured to pre-compensate for at least a first portion of dispersion associated with the modulated optical signal. A first dispersion compensation unit (DCU) is disposed between the first DCM and an optical transmission line. The DCU comprises a first and second optical amplifiers and a second DCM disposed therebetween. The second DCM is configured to pre-compensate for at least a second portion of optical dispersion associated with the modulated optical signal supplied to the transmission line. A second dispersion compensation unit (DCU) is communicatively coupled to the optical transmission line and includes third and fourth optical amplifiers and a third dispersion compensation module (DCM) disposed therebetween. The DCM is configured to compensate for at least a first portion of accumulated optical dispersion associated with the optical signals supplied from the transmission line. A receiver is communicatively coupled to the fourth amplifier and is configured to convert the plurality of optical signals into corresponding electrical signals. The receiver includes a digital signal processor configured to compensate for a second portion of accumulated dispersion associated with each of the corresponding electrical signals.

### Brief Description of the Drawings

FIG. 1 is a simplified block diagram of a prior art optical communication system with no in-line dispersion compensation.

FIG. 2 is a block diagram of an optical transmission system utilizing DCU's in accordance with an embodiment of the present disclosure.

FIG. 3 is a block diagram of the DCU's shown in Fig. 2.

Fig. 3A is a simplified block diagram of a receiver shown in Fig. 2.

FIG. 4 illustrates a DCM in accordance with an embodiment of the present disclosure.

FIG. 5 illustrates a DCM in accordance with an alternate embodiment of the present disclosure.

FIG. 6 generally illustrates an optical communication system in accordance with another embodiment of the present disclosure.

### DETAILED DESCRIPTION

Embodiments of the invention will now be described more fully hereinafter with reference to the accompanying drawings. The invention, however, may be embodied in many different forms and should not be construed as limited to the embodiments set forth herein. Rather, these embodiments are provided so that this disclosure will be thorough and complete, and will fully convey the scope of the invention to those skilled in the art. In the drawings, like numbers refer to like elements throughout.

Presently disclosed embodiments provide an optical transmission system utilizing optically aided digital signal processing (DSP) dispersion compensation at a system terminal without the use of in-line dispersion compensation. This allows the system to utilize a transmission line comprising single mode fiber (SMF) with a large effective area to reduce the effects of fiber non-linearities while still adequately compensating for accumulated dispersion. By employing optically aided DSP dispersion compensation, the plurality of Application Specific Integrated Circuits (ASIC) required to perform non-optically assisted DSP is avoided as well as obviating the need for associated power requirements with these ASICs. This also allows lower cost SMF to be installed along the entire transmission line between the terminals.

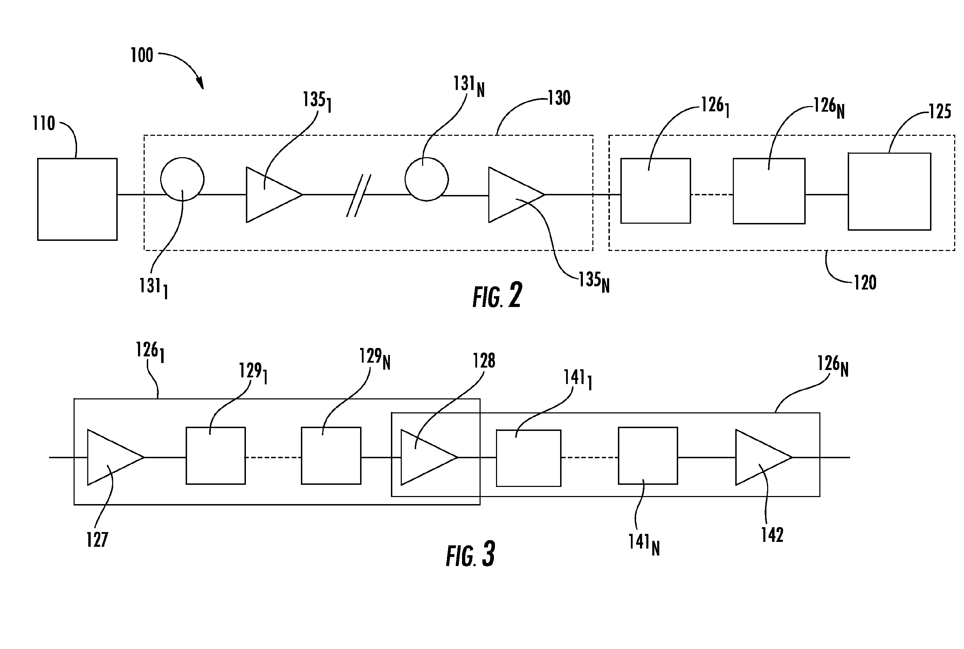

FIG. 2 generally illustrates an optical communication system 100 including a transmit terminal 110, receive terminal 120 and an optical transmission line 130 disposed therebetween. The optical transmission line 130 comprises single mode fiber (SMF) spans 131₁...131_{N} and a plurality of optical amplifiers 135₁...135_{N} (*e.g.* erbium doped fiber amplifiers) configured to propagate optical communication signals between terminals 110 and 120. The transmission line 130 may be an undersea fiber optic cable having a plurality of fiber pairs configured to propagate dense wavelength division multiplexed (DWDM) optical signals having a plurality of optical channels, each at a particular wavelength.

It is important to note that transmission line 130 does not include in-line dispersion compensation and utilizes single mode fiber. As referenced above, dispersion compensating fiber (DCF) has previously been used along the fiber spans of an optical communication system to compensate for accumulated dispersion. However, the use of DCF contributes an additional signal propagation path having its own attenuation and nonlinear properties. In addition, the amount of accumulated dispersion that can be compensated for using DSP at the receiver 125 while maintaining adequate overall signal quality is limited. Thus, receive terminal 120 in accordance with the present embodiment includes one or more dispersion compensation units (DCU) 126₁...126_{N} communicatively coupled to transmission line 130 and receiver 125. In particular, each DCU is configured to receive the transmitted optical signals and provide an amount of dispersion compensation in the optical domain for the received signals propagating over transmission line 130 prior to transmission to receiver 125 which employs electronic dispersion compensation utilizing digital signal processing (DSP) techniques. In this manner, each DCU provides dispersion compensation to optically aid the DSP dispersion compensation performed at receiver 125. The number of DCU's required to adequately compensate for dispersion prior to supplying the optical signals to receiver 125 will depend on the amount of dispersion compensation required based on a number of factors including, but not limited to, length of signal propagation over transmission line 130, channel bandwidth, fiber type, etc.

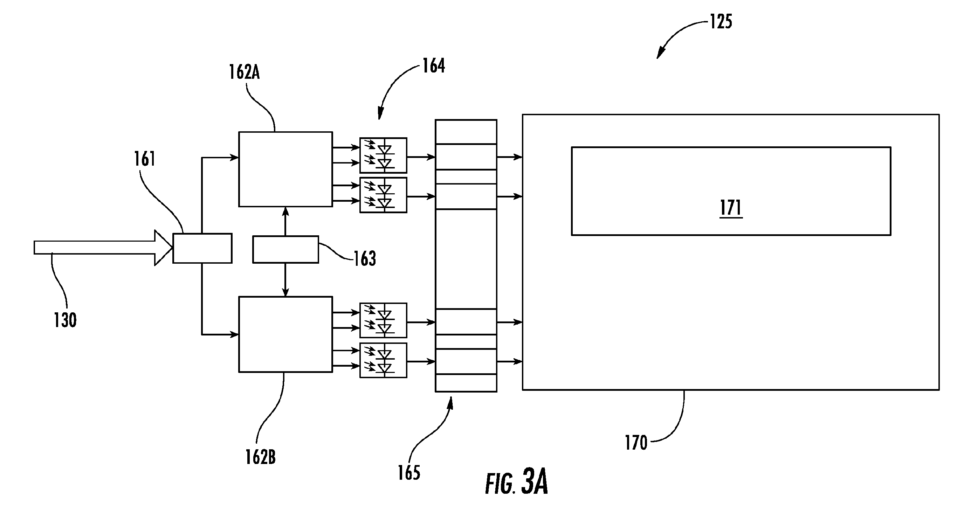

Figure 3 illustrates a block diagram of DCU's 126₁...126_{N} shown in Fig. 2 in accordance with an embodiment of the present disclosure. DCU 126₁ comprises a first optical amplifier 127, a second optical amplifier 128 and one or more dispersion compensation modules (DCM) 129₁...129_{N} disposed therebetween. Each optical amplifier may be, for example, an erbium doped fiber amplifier having a single or multiple gain stages to amplify the received optical signals across the plurality of channel wavelengths. DCM 129₁ is configured to compensate for at least a portion of optical dispersion associated with the optical signals supplied from the transmission line 130 and supply these signals to receiver 125, to an additional DCM 129_{N} or to another DCU 126_{N}. Each of the DCM's 129₁...129_{N} have a high Figure of Merit (FOM) which is the amount of dispersion per device divided by the insertion loss of the DCM. High FOM of approximately 10³ ps/nm/dB of loss, for example, may be required for certain long haul transmission systems.

As an example of one preferred embodiment, DCU 126_{N} is optically coupled to DCU 126₁ and is configured to receive the optical signals from DCU 126₁ and supply these signals to the receiver 125, to an additional DCM or to another DCU depending on the amount of dispersion compensation required. DCU 126_{N} comprises a first optical amplifier 128, a second optical amplifier 142 and one or more DCM's 141₁...141_{N} disposed therebetween. Although DCU 126_{N} physically may share second amplifier 128 with DCU 126₁, amplifier 128 is logically considered a first amplifier of DCU 126_{N}. Similar to amplifiers 127 and 128, amplifier 142 may be, for example, an erbium doped fiber amplifier having a single or multiple gain stages. Each of the DCMs 141₁...141_{N} is configured to compensate for at least a portion of optical dispersion associated with the optical signals supplied from DCU 126₁. Receiver 125 is communicatively coupled to amplifier 142 of DCU 126_{N}. If only one DCU 126₁ is employed based on the amount of dispersion compensation required, then receiver 125 is coupled to second amplifier 128. Although transmitter 110 and receiver 125 are illustrated as separate elements, it should be understood that the transmitter 110 may also be included in receive terminal 120 and vice versa to accommodate bidirectional transmission therebetween.

Receiver 125 is configured to receive the optical data signals from at least one of DCU's 126₁...126_{N} and convert these optical signals, each at a particular wavelength, into corresponding electrical signals. Receiver 125 may be a coherent receiver which detects not only an optical signal's amplitude, but phase and polarization as well. In particular, coherent detection mixes the received optical data signals from the DCU with light from a local oscillator which is tuned to a wavelength close to the wavelength or channel of the optical data signal. This combined signal is detected by a photodetector in receiver 125 which outputs a photocurrent containing a component at a frequency that is the difference between the received optical data signal and the local oscillator frequency. This differential signal contains the amplitude and phase carried by the optical data signal from transmitter 110. In other words, it detects whole characteristics of the received signal across the spectrum and converts these optical signals into electrical signals.

Fig. 3A is a simplified block diagram of receiver 125 shown in Fig. 2. The transmitted optical data signals are received and supplied to a polarization beam splitter (PBS) 161 from transmission line 130. The polarization split signal is provided to a pair of 90 ° optical hybrids 162A and 162B which extracts phase and amplitude between the received signal and local oscillator 163 as described above. A plurality of photodetectors denoted generally as 164 generate respective electrical signals proportional to the received optical data signals. A plurality of Analog to Digital (A/D)converters 165 connected to respective photodetectors 164 receive the electrical signals and supply corresponding digital signals to digital signal processor (DSP) 170. The DSP 170 includes dispersion compensation circuit 171 configured to perform dispersion compensation associated with each of the electrical signals (*i.e.* electrical dispersion compensation) representing the optical data signals supplied by A/D converters 165. DSP 170 may also include various other modules/circuits to process the received signal as well as a separate module to compensate for polarization mode dispersion. The dispersion compensation circuit 171 provides dispersion compensation to the signals which have already undergone dispersion compensation via DCU's 126₁...126_{N}. In this manner, the DCU's provide optically aided dispersion compensation to the dispersion compensation circuit 171 of DSP 170 thereby providing a detectable data signal at receiver 125.

Fig. 4 illustrates a DCM 129₁...129_{N}, 141₁...141_{N} in accordance with an embodiment of the present disclosure. For ease of explanation, a DCM 129_{N} will be described, but this description is equally applicable to the other DCM's except for the respective positions within a particular DCU. DCM 129_{N} includes a first optical circulator 210 coupled to first optical amplifier 127. In particular, circulator 210 includes a plurality of input and output ports 210₁...210₃. A first of the plurality of input ports 210₁ receives the optical signal from amplifier 127. The received signals are circulated to a first output port 210₂ (which is the same as the second input port). A fiber Bragg grating 215 is coupled to the output port 210₂ and is configured to reflect a portion of the received optical data signal back toward the second input port 210₂ to provide dispersion compensation for the received optical data signal as described below.

Fiber Bragg grating 215 is an optical fiber that contains a series of perturbations or modulation of its core refractive index over a given length. The grating is configured to reflect light propagating therethrough when the wavelength of that light corresponds to the modulation periodicity. However, the grating period varies along its length and different wavelengths are reflected by different portions of the grating. This induces different time delays of the reflected optical signals based on their respective wavelengths. As noted above, the optical data signals transmitted over line 130 travel long distances and are subject to dispersion (chromatic and PMD) which stretches or broadens the optical pulses that comprise these data signals. Accordingly, the effect of reflecting these optical pulses using grating 215 is to compress, to some degree, the received optical pulses thereby compensating for the accumulated dispersion. The reflected optical signals are then supplied back to circulator 210 and are output via port 210₃.

DCM 129_{N} further includes a second optical circulator 220 coupled to second optical amplifier 128. Circulator 220 includes a plurality of input and output ports 220₁...220₃. A first of the plurality of input ports 220₁ receives the optical signal from first optical circulator 210. The received signals are circulated to a first output port 220₂. Another fiber Bragg grating 225 is coupled to the output port 220₂ and is configured to reflect a portion of the received optical data signal back toward port 220₂ to provide dispersion compensation for the received optical data signal as described above. The reflected optical signals are then supplied back to circulator 220 and are output via port 220₃ to optical amplifier 128, to another DCM or to another DCU.

Fig. 5 illustrates an alternative embodiment of a DCM 129_{N} disposed between amplifiers 127 and 128. The following description of DCM 129_{N} is equally applicable to the other DCM's except for the respective position within a particular DCU. DCM 129_{N} includes a first mode converter 250, a span of higher order mode (HOM) dispersion compensating fiber 255 and a second mode converter 260. The first mode converter 250 is coupled to amplifier 127 and is configured to receive optical data signals propagating in a first mode along transmission line 130. First mode converter converts these signals to a higher order mode and supplies them to the span of HOM fiber 255. The mode converter 250 is needed at the junction where the single mode fiber from amplifier 127 and HOM fiber 255 meet so that propagation of the lower order mode through the HOM 255 is minimized. This is due to the interference between lower and higher order modes propagating through HOM fiber 255 that would otherwise occur if not for mode converter 250. HOM fiber 255 is configured to receive the optical data signals at the higher order mode from mode converter 250 and compensate for dispersion optically. Typical HOM fiber has a large effective area A*_{eff}* and exhibits a large negative waveguide dispersion which compensates for positive dispersion. The second mode converter 260 is coupled to HOM fiber 255 and is configured to receive the optical signals at the higher order mode and convert these signals back to the first mode. These optically compensated signals are then output to optical amplifier 128, to another DCM or to another DCU depending on the amount of desired dispersion compensation.

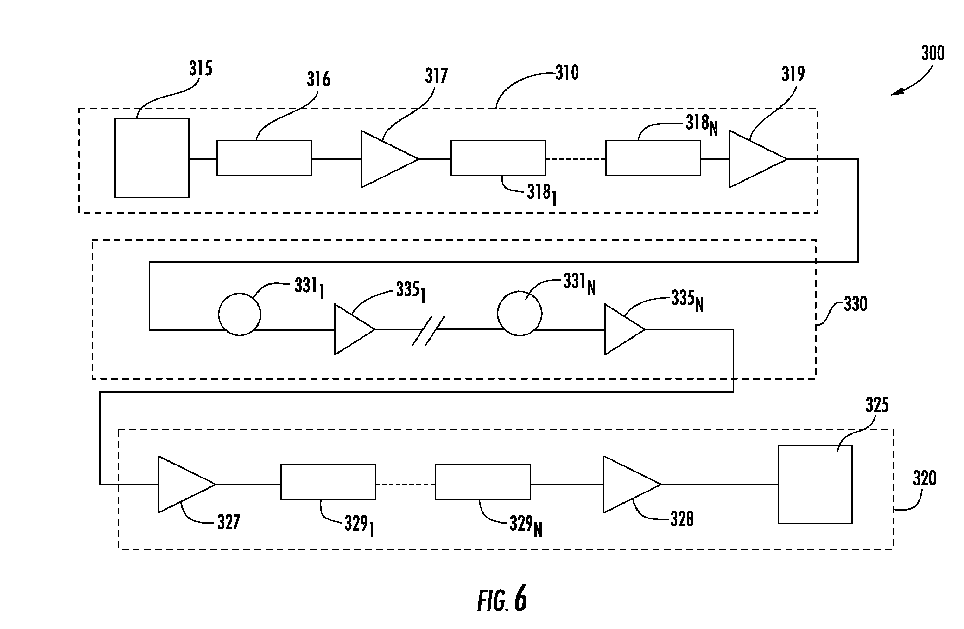

Fig. 6 generally illustrates an optical communication system 300 employing pre-compensation using DCMs at a transmit terminal 310, an optical transmission line 330 without in-line dispersion compensation and a receive terminal 320 including DCMs to optically aid digital signal processing at the terminal to compensate for accumulated dispersion. In particular, transmit terminal 310 includes a transmitter 315 configured to supply optical data signals having a plurality of optical channels to DCM 316. Each of the DCM's s 316, 318₁...318_{N}, 329₁...329_{N} of system 300 have the configurations as shown in Figs. 4 and 5. DCM 316 is configured to pre-compensate for at least a first portion of dispersion associated with the modulated optical signal supplied by transmitter 315. A first dispersion compensation unit (DCU), defined by optical amplifiers 317, 319 and DCMs 318₁...318_{N} disposed therebetween, receives the optical data signal from DCM 316 and provides additional pre-dispersion compensation for at least a second portion of optical dispersion. The pre-dispersion compensated signal is supplied to transmission line 330 which comprises single mode fiber (SMF) spans 331₁...331_{N} and a plurality of optical amplifiers 335₁...335_{N} (*e.g.* erbium doped fiber amplifiers) configured to propagate optical communication signals between transmit terminal 310 and receive terminal 320. The transmission line 330 may be an undersea fiber optic cable having a plurality of fiber pairs configured to propagate dense wavelength division multiplexed (DWDM) optical signals having a plurality of optical channels, each at a particular wavelength.

The receive terminal 320 includes a DCU defined by amplifiers 327, 328 and DCM's 329₁...329_{N} disposed therebetween. Each of the DCM's 329₁...329_{N} is configured to compensate for a portion of accumulated optical dispersion associated with the optical data signals which propagated over transmission line 330. Receive terminal 320 includes a receiver communicatively coupled to amplifier 328 and is configured to convert the optical data signals into corresponding electrical signals. As described with reference to receiver 125 of Fig. 3A, receiver 325 may be a coherent receiver that includes DSP configured to compensate for another portion of accumulated dispersion associated with each of corresponding electrical signals. In this manner, optical dispersion compensation aids a DSP in a transmission system which employs single mode fiber with no in-line dispersion compensation to provide a detectable data signal at a receiver transmitted over long haul distances.

Embodiments of the present disclosure may be implemented at a transmitter and receiver of an optical communication system. A processor may be used to effectuate operations associated with a communication system, as is known to one of ordinary skill in the art. A processor as used herein is a device for executing stored machine-readable instructions for performing tasks and may comprise any one or combination of hardware, software, and firmware. A processor may also comprise memory storing machine-readable instructions executable for performing tasks. A processor acts upon information by manipulating, analyzing, modifying, converting, or transmitting information for use by an executable procedure or an information device, and/or by routing the information to an output device. A processor may use or comprise the capabilities of, e.g., a controller or microprocessor. A processor may be electrically coupled with any other processor, enabling interaction and/or communication therebetween. A processor comprising executable instructions may be electrically coupled by being within stored executable instructions enabling interaction and/or communication with executable instructions comprising another processor. A user interface processor or generator is a known element comprising electronic circuitry or software, or a combination of both, for generating display images or portions thereof.

An executable application comprises code or machine readable instructions for conditioning the processor to implement predetermined functions, such as those of an operating system, a context data acquisition system, or other information processing system, *e.g.*, in response to user command or input. An executable procedure is a segment of code or machine readable instruction, sub-routine, or other distinct section of code or portion of an executable application for performing one or more particular processes. These processes may include receiving input data and/or parameters, performing operations on received input data and/or performing functions in response to received input parameters, and providing resulting output data and/or parameters.

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Further, although the present disclosure has been described herein in the context of a particular implementation in a particular environment for a particular purpose, those of ordinary skill in the art will recognize that its usefulness is not limited thereto and that the present disclosure may be beneficially implemented in any number of environments for any number of purposes. The invention is defined by the appended set of claims.

## Claims

1. A communication system terminal comprising:
a dispersion compensation unit (DCU) (126) communicatively coupled to an optical transmission line (130), said DCU comprising first and second optical amplifiers (127, 128) and a dispersion compensation module (DCM) (129) disposed therebetween, said DCM configured to compensate for at least a first portion of optical dispersion associated with said optical signals supplied from said transmission line (130); and
a receiver (125) communicatively coupled to said second amplifier, said receiver configured to convert said plurality of optical signals into corresponding electrical signals, said receiver further comprising a digital signal processor (170) configured to compensate for a second portion of dispersion associated with each of said corresponding electrical signals.

2. The communication system terminal of claim 1 wherein said DCM (129) is a first DCM (129₁), said DCU (126) further comprising a second DCM (129₂) disposed between said first DCM and said second amplifier (128), said second DCM configured to compensate for a third portion of optical dispersion associated with said optical signals.

3. The communication system terminal of claim 1 or claim 2 wherein said DCU (126) is a first DCU (126₁) and said DCM is a first DCM (129₁), said terminal further comprising a second DCU (126₂) disposed between said first DCU (126₁) and said receiver (125), said second DCU (126₂) comprising a third optical amplifier (142) and a second DCM (129₂), said second DCM disposed between said second amplifier (128) and said third amplifier (142) and configured to compensate for at least a third portion of optical dispersion associated with said optical signals supplied from said first DCU (126₁).

4. The communication system terminal of any one of claims 1-3 wherein said DCM (129) comprises:
an optical circulator (210) coupled to said first optical amplifier (127), said circulator comprising a plurality of outputs and inputs (210₁-210₃); and
a fiber Bragg grating (215) coupled to a first of said plurality of outputs (210₂) and a first of said plurality of inputs (210₁) of said optical circulator (210), said fiber Bragg grating configured to reflect a portion of said optical signals having one or more particular wavelengths back toward said first of said plurality of inputs of said optical circulator, wherein said reflected optical signals are output from said optical circulator (210) via a second of said plurality of outputs (210₃).

5. The communication system terminal of any one of claims 1-4 wherein said DCM (129) comprises:
a first mode converter (250) coupled to said first amplifier (127), said mode converter configured to receive said optical signals propagating in a first mode and converting said signals to a higher order mode;
a span of higher order mode fiber (255) coupled to said first mode converter (250), said higher order mode fiber configured to receive said signals at said higher order mode and compensate for said first portion of optical dispersion associated with said optical signals; and
a second mode converter (260) coupled to said span of higher order mode fiber (255) and configured to receive said signals at said higher order mode and converting said signals back to said first mode.

6. The communication system terminal of any one of claims 1-5 wherein said receiver (125) is a coherent receiver.

7. The communication system terminal of any one of claims 1-6 wherein said receiver (125) is a non-coherent receiver.

8. The communication system terminal of any one of claims 1-7 wherein said transmission line (130) extends from a transmitter (110) to said receiver (125), said transmission line not having any in-line dispersion compensation.

9. The communication system terminal of any one of claims 1-8 wherein said transmission line (130) comprises a plurality of optical amplifiers (127, 128) disposed between spans of single mode fiber (131₁-131_{N}).

10. A communication system comprising:
a transmitter (310) configured to supply a modulated optical signal having a plurality of optical channels;
a first dispersion compensation module (DCM) (316) communicatively coupled to said transmitter (310), said first DCM configured to pre-compensate for at least a first portion of dispersion associated with said modulated optical signal;
a first dispersion compensation unit (DCU) (317, 318₁-318_{N}, 319) disposed between said first DCM (316) and an optical transmission line (330), said DCU comprising first and second optical amplifiers (317, 319) and a second DCM (318₁) disposed therebetween, said second DCM configured to pre-compensate for at least a second portion of optical dispersion associated with said modulated optical signal supplied to said transmission line (330); and
a communication system terminal according to any one of the preceding claims with the dispersion compensation unit (126) communicatively coupled to the optical transmission line (330).

11. The communication system of claim 10 wherein said first DCU (317, 318₁-318_{N}, 319) further comprises a third DCM (318₂) disposed between said second DCM (318₁) and said second amplifier (319), said third DCM configured to compensate for a third portion of optical dispersion associated with said modulated optical signal.

12. The communication system of claim 10 or claim 11 wherein said first DCM (316) comprises:
an optical circulator (210) having a plurality of outputs and inputs (210₁ - 210₃), a first of said plurality of inputs (210₁) communicatively coupled to said transmitter (315) and receiving said modulated optical signal; and
a fiber Bragg grating (215) coupled to a first of said plurality of outputs (210₂) and a second of said plurality of inputs (210₂) of said optical circulator (210), said fiber Bragg grating configured to reflect said plurality of optical channels back toward said second of said plurality of inputs (210₂) of said optical circulator (210), wherein said reflected optical signal is output from said optical circulator (210) via a second (210₃) of said plurality of outputs.

13. The communication system of any one of claims 10-12 wherein said second DCM (316₁) comprises:
an optical circulator (210) having a plurality of outputs and inputs (210₁ - 210₃), a first of said plurality of inputs (210₁) communicatively coupled to said first amplifier (317); and
a fiber Bragg grating (215) coupled to a first of said plurality of outputs (210₂) and a second of said plurality of inputs (210₂) of said optical circulator (210), said fiber Bragg grating (215) configured to reflect said plurality of optical channels back toward said second of said plurality of inputs (210₂) of said optical circulator (210), wherein said reflected optical signal is output from said optical circulator (210) via a second of said plurality of outputs (210₃).

14. The communication system of any one of claims 10-13 wherein said first DCM (316) comprises:
a first mode converter (250) coupled to said transmitter (315), said first mode converter configured to receive said modulated optical signal propagating in a first mode and converting said signals to a higher order mode;
a span of higher order mode fiber (255) coupled to said first mode converter, said higher order mode fiber configured to receive said signals at said higher order mode and pre-compensate for said first portion of optical dispersion associated with said optical signals; and
a second mode converter (260) coupled to said span of higher order mode fiber (255), said second mode converter configured to receive said signals at said higher order mode and converting said signals back to said first mode, said second mode converter having an output communicatively coupled to said first amplifier (317).

15. The communication system of any one of claims 10-14 wherein said second DCM (318₁) comprises:
a first mode converter (250) coupled to said first amplifier (317), said first mode converter configured to receive said modulated optical signal propagating in a first mode and converting said signals to a higher order mode;
a span of higher order mode fiber (255) coupled to said first mode converter (250), said higher order mode fiber configured to receive said signals at said higher order mode and pre-compensate for a second portion of optical dispersion associated with said modulated optical signal; and
a second mode converter (260) coupled to said span of higher order mode fiber (255), said second mode converter configured to receive said signals at said higher order mode and converting said signals back to said first mode, said second mode converter having an output communicatively coupled to said second amplifier (319).

16. The communication system of any one of claims 10-15 wherein said transmission line (330) extends from a transmit terminal (310) to a receive terminal (320), said transmission line (330) not having any in-line dispersion compensation, the transmit terminal (310) including said transmitter (315), said first dispersion compensation module (316), and said first dispersion compensation unit (317, 318₁-318_{N}, 319), and the receive terminal (320) including said dispersion compensation unit (126; 327, 329₁-329_{N}, 328) and said receiver (125; 325).

17. The communication system of any one of claims 10-16 wherein said transmission line (330) comprises a plurality of optical amplifiers (335₁-335_{N}) disposed between spans of single mode fiber (331₁-331_{N}).
